# EUROPÄISCHE PATENTSCHRIFT

(11) **EP 2 361 707 B1**
(45) Veröffentlichungstag und Bekanntmachung des Hinweises auf die Patenterteilung: **25.11.2015**
(21) Anmeldenummer: 11001019.6
(22) Anmeldetag: 08.02.2011
(51) Int. Cl.: B23B 29/20

(54) **Werkzeugmaschine mit Werkzeug**
Tool machine with tool
Machine-outil avec outil

(30) Priorität: 27.02.2010 DE 102010009669
(43) Veröffentlichungstag der Anmeldung: 31.08.2011
(73) Patentinhaber: heimatec GmbH Präzisionswerkzeuge, 77871 Renchen (DE)
(72) Erfinder: Fiedler, Harald, 77652 Offenburg (DE); Maelger, Hans-Jürgen, 77866 Rheinau-Holzhausen (DE); Maier, Harald, 77746 Schutterwald (DE); Weber, Franz, 77749 Hohberg (DE)
(74) Vertreter: Maucher Börjes Jenkins Patent- und Rechtsanwälte

(56) Entgegenhaltungen:
- DE-A1- 1 602 902
- DE-A1- 3 025 769
- DE-B3-102005 002 093
- DE-U1- 20 319 597
- GB-A- 2 092 034

## Beschreibung

Die Erfindung betrifft eine Werkzeugmaschine mit wenigstens einem Werkzeugrevolver und einer zugehörigen Werkzeugscheibe mit Aufnahmestellen zur Befestigung von wenigstens einem Werkzeug, wobei die einzelnen Aufnahmestellen der Werkzeugscheibe des Werkzeugrevolvers Gewindebohrungen für jeweils einen Haltekopf und einen Gewindebereich aufweisende Befestigungsschrauben haben, mit welchen wenigstens ein Gehäuse eines Werkzeugs an der Werkzeugscheibe des Werkzeugrevolvers in Gebrauchsstellung festgelegt ist.

Eine derartige Werkzeugmaschine ist aus der DE 30 25 769 A1 bekannt.

Derartige Werkzeugmaschinen mit entsprechenden Befestigungsmöglichkeiten für unterschiedliche Werkzeuge sind bekannt, wobei die Werkzeuge jeweils an den durch die Werkzeugscheibe und deren Befestigungslochungen vorgegebenen Stellen Bohrungen für die Befestigungsschrauben benötigen.

Durch diese vorgegebenen Befestigungsstellen ist der an dem Werkzeug vorhandene Platz begrenzt, d.h. größere und vor allem angetriebene und eventuell mit hoher Leistung angetriebene Werkzeuge können aneinem solchen Werkzeugrevolver bisher in der Regel nicht be¬festigt werden.

Es besteht deshalb die Aufgabe, eine Werkzeugmaschine der vorstehend definierten Art zu schaffen, an deren Werkzeugre¬volver unter Ausnutzung der Befestigungslochungen auch größere Werkzeuge befestigt werden können.

Zur Lösung dieser Aufgabe ist vorgesehen, dass zur Übertra¬gung der Haltekräfte auf die Befestigungsschrauben und zur Befestigung des Gehäuses des Werkzeugs wenigstens ein seitlich zustellbares oder antreibbares, über wenigstens eine Schrägfläche wirkendes Maschinenelement am Gehäuse des Werkzeugs vorgesehen ist, wobei an dem Haltekopf der Befestigungsschrauben seitlich wenigstens ein zustellbares oder antreibbares Maschinenelement angreift, das die Befestigungsschrauben in Gebrauchsstellung auf Zug belastet, wobei das Maschinenelement seinerseits an dem Gehäuse des Werkzeugs befestigt oder gelagert ist. Seitliche Zustellung bedeu¬tet dabei eine Zustellung quer zur Längsmittelachse der Be-festigungsschraube.

Über die Schrägfläche des Maschinenelements kann die bei der seitlichen Zustellung des Maschinenelements aufgewendete Kraft umgelenkt werden und so als Haltekraft zwischen den zu verbindenden Teilen wirken. Die aufgebrachte Kraft über die seitliche Zustellung ergibt eine resultierende Haltekraft, die so groß ist, dass das Werkzeug und sein Gehäuse mit not¬wendiger Sicherheit mit dem Werkzeugrevolver lösbar verbunden ist. Es ist auch denkbar, dass die Schrägfläche als gekrümmte Fläche wie bei einer Exzenterscheibe oder schraubenlinienförmig gestaltet ist. Die Fixierung des Werkzeugs auf dem Werk-zeugrevolver durch seitliche Zuführung des Maschinenelements hat gegenüber den bisher verwendeten Befestigungen den erheblichen Vorteil, dass bei der erfindungsgemäßen Werkzeugmaschine für die Maschinenelemente zur Befestigung der Werk¬zeuge weniger Raum, insbesondere in Verlängerung der oder über den Befestigungsschrauben beansprucht wird. Dieser Zuge¬winn an verfügbarem Volumen lässt sich für die Gestaltung größerer, komplexerer und/oder leistungsstärkerer Werkzeuge verwenden.

Das Maschinenelement greift direkt an den vorhandenen Befestigungsschrauben an und wirkt mit einer Schrägfläche aufgrund der seitlichen Zustellung auf den Haltekopf. Da sich das Maschinenelement dabei im Gehäuse des Werkzeugs abstützt, ergibt sich eine entsprechende Gegenkraft und fixiert das Werkzeug mit seinem Gehäuse auf der Werkzeug-scheibe des Werkzeugrevolvers. Auch hier besteht der Vorteil darin, dass die Befestigungselemente seitlich, also quer zur Längsmittelachse der Befestigungsschrauben zugeführt werden können, wodurch sie den Bauraum für das Werkzeug möglichst wenig vermindern.

Von besonderer Bedeutung für die Erfindung kann es sein, wenn das Werkzeug und/oder sein Gehäuse der Aufnahmestelle der Werkzeugscheibe zugewandte Aussparungen zum Übergreifen der Halteköpfe der zuvor eingedrehten Befestigungsschrauben hat und wenn diese Aussparungen von der Seite her für das Maschi¬nenelement zugänglich sind. So lässt sich das Werkzeug beson¬ders leicht auf die Werkzeugscheibe aufsetzen und mit dem Ma¬schinenelement befestigen.

Eine günstige alternative Gestaltungsform der Erfindung kann vorsehen, dass an der Werkzeugscheibe je Aufnahmestelle wenigstens zwei, drei oder vier Befestigungsschrauben vorgesehen sind, die die zuverlässige Befestigung des Werkzeugs an der Werkzeugscheibe und dem Werkzeugrevolver ermöglichen können.

Außerdem kann die erfindungsgemäße Schrägfläche dadurch verwirklicht sein, dass der Haltekopf der Befestigungsschraube an seiner Unterseite die Schrägfläche oder ein mit Schrägflächen versehenes Element aufweist.

Die Schrägfläche an der Unterseite des Haltekopfes fungiert als Widerlager für das von der Seite her zustellbare Maschinenelement. Dieses kommt mit der Schrägfläche des Haltekopfes in Kontakt und liegt möglichst großflächig an demselben an und kann so die Normalkraft besonders gut auf die Befestigungsschraube übertragen, weil die Schrägfläche die seitlich wirksame Druckkraft des Maschinenelements in eine in Längsrichtung der Befestigungsschrauben wirksame Teilkraft umlenkt.

Es ist aber auch möglich, dass der Haltekopf der Befestigungsschraube rotationssymmetrisch ist und eine mit der Schrägfläche versehene Ringfläche oder Ringnut aufweist. Das Profil der Ringnut ist dabei so gestaltet, dass das Maschinenelement gut in die Ringnut eingreifen kann und sich die notwendigen Kräfte mit großer Sicherheit übertragen lassen. Das Profil der Ringnut kann beispielsweise bogenförmig oder trapezförmig sein.

Dabei ist es für die Kraftübertragung besonders günstig, wenn an dem Maschinenelement die/eine Schrägfläche zum Zusammenwirken mit dem Haltekopf oder mit dessen Schrägfläche vorgesehen ist.

Eine weitere Ausgestaltung der Erfindung kann vorsehen, dass das Gehäuse des Werkzeugs je Befestigungsschraube zumindest einen seitlichen Zugang mit Lagerung für das zuführbare Maschinenelement aufweist. In Gebrauchsstellung sitzt das Gehäuse auf der Werkzeugscheibe auf und die Befestigungsschrauben stecken bereits in den Aussparungen an der Unterseite des Gehäuses. Die Befestigungsschrauben sind für das seitlich zustellbare Maschinenelement über den seitlichen Zugang im Gehäuse für die Befestigung des Werkzeugs auf der Werkzeugscheibe zugänglich.

Dabei kann es wichtig sein, dass der seitliche Zugang eine Gewindebohrung und dass das zustellbare Maschinenelement eine Schraube oder Madenschraube ist. Über die Gewindebohrung kann das Maschinenelement bzw. die Schraube mit ausreichender Kraft unter den Haltekopf der Befestigungsschraube gedrückt werden, wodurch sich die Haltekraft, die durch das Anpressen der Schraube an die Unterseite des Haltekopfes entsteht, auf das Gehäuse übertragen lässt und das Werkzeug sicher an der Werkzeugscheibe des Werkzeugrevolvers befestigt werden kann.

Außerdem kann es vorteilhaft sein, wenn die Schraube oder Madenschraube einen sich konisch verjüngenden Endbereich als Schrägfläche aufweist. Mit dem sich konisch verjüngenden Endbereich kann die Schraube oder Madenschraube eine möglichst große Kontaktfläche zu der Schrägfläche an der Unterseite des Haltekopfes für die Übertragung der Kräfte nutzen.

Es kann als günstig erachtet werden, wenn der seitliche Zugang rechtwinklig zur Längsmittelachse der Befestigungsschraube verläuft.

Es ist aber auch möglich, dass der seitliche Zugang im Gehäuse derart schräg verläuft, dass seine Längsmittelachse mit der Längsmittelachse des Gewindebereichs einen spitzen Winkel bildet. Da das Maschinenelement in spitzem Winkel also klei¬ner als 90° zur Längsmittelachse der Befestigungsschraube an¬greift, ist die notwendige Kraftumlenkung beim Verspannen des Maschinenelements mit dem Haltekopf vergleichsweise gering, was insgesamt als günstig für eine zuverlässige Befestigung des Werkzeugs am Werkzeugrevolver erachtet werden kann, ins¬besondere wenn mit hohen auf die Werkzeugmaschine einwirken¬den Bearbeitungskräften zu rechnen ist. Die beschriebene Aus-richtung des seitlichen Zugangs erweist sich ebenfalls als günstig für den Fall, dass Befestigungsschrauben mit Halte¬köpfen, die Ringnuten aufweisen, eingesetzt werden.

Es ist aber auch denkbar jedoch nicht erfindungsgemäß, dass das zustellbare Maschinenele¬ment ein Klammerelement ist, das quer zum Verlauf der Befes¬tigungsschraube seinerseits mit wenigstens einer Verstell¬schraube andrückbar ist. Dies hat den Vorteil, dass das Gehäuse keinerlei Aussparungen für die Aufnahme von Befesti¬gungsschrauben aufweisen muss und somit maximalen Bauraum für das Werkzeug bereit stellt.

Zweckmäßig kann es dann sein, wenn die Verstellschraube für das Klammerelement in eine ein Gewinde aufweisende Bohrung im Gehäuse des Werkzeugs eingreift. Über die Verstell¬schraube kann das Klammerelement fest an das Gehäuse ange¬presst und so das Gehäuse des Werkzeugs indirekt an dem Werk¬zeugrevolver befestigt werden. Die Verstellschraube verläuft dabei quer oder rechtwinklig zur Längsmittelachse der Befes¬tigungsschrauben.

Besonders günstig ist es, wenn das Klammerelement eine Schrägfläche passend zu der Schrägfläche am Gehäuse des Werk¬zeugs aufweist. Bei entsprechender Gestaltung der Schrägflächen und insbesondere ihrer Neigungswinkel kann die notwendige Haltekraft besonders gut übertragen werden.

Günstig ist auch, wenn die Länge des Klammerelements wenigstens einem Viertel, einem Drittel, der Hälfte oder drei Viertel der Seitenlänge des zu befestigenden Werkzeuges ent¬spricht. Ebenso ist es möglich, dass die Länge des Klemmer¬elements der Seitenlänge des Werkzeugs entspricht oder größer als diese ist. So bemessene Klammerelemente können dafür sor¬gen, dass die Kraftübertragung zwischen Gehäuse und Werkzeug¬scheibe gleichmäßig erfolgt und das Werkzeug auch bei Vibra¬tionen und Erschütterungen positionsfest mit dem Werkzeugre¬volver verbunden bleibt.

Um die Verbindung zwischen Gehäuse und Werkzeugrevolver mit noch größerer Sicherheit zu realisieren, können bei einer alternativen Gestaltungsform der Erfindung wenigstens zwei Klammerelemente oder ein Klammerelement und eine zusätzliche Sicherung vorgesehen sein.

Nachstehend sind Ausführungsbeispiele anhand der Zeichnung -näher beschrieben. Es zeigt in zum Teil schematisierter Darstellung:
- Fig.1: eine Gesamtansicht der erfindungsgemäßen Werkzeugma¬schine mit einer vergrößerten Detailan-sicht des zugehörigen Werkzeugrevolvers und einem daran befestigten Werkzeug,
- Fig.2: eine geschnittene Seitenansicht des Werkzeugs am Werkzeugrevolver mit einer dem Stand der Technik entsprechenden Befestigung,
- Fig.3: eine der Fig.2 entsprechende Ansicht des am Werkzeug¬revolver befestigten Werkzeugs mit einer ersten Ausführungsform der erfindungsgemäßen Befes¬tigung,
- Fig.4: eine der Fig.3 entsprechende Ansicht des Werkzeugs gemäß einer nicht beanspruchten Variante mit einer Adapterplatte und seitlich zugestelltem Klam¬merelement,
- Fig.5: eine Seitenansicht einer Befestigungsschraube mit einer Ringnut mit bogenförmigem Profil,
- Fig.6: eine Draufsicht auf den Haltekopf der in Fig.5 darge¬stellten Befestigungsschraube,
- Fig.7: eine perspektivische Ansicht der Befestigungsschraube gemäß Fig.5 und 6,
- Fig.8: eine Seitenansicht der Befestigungsschraube mit zwei radial ausgebildeten Anschlägen und einer rechtwinklig zur Längsmittelachse der Befestigungs¬ schraube zugestellten Madenschraube,
- Fig.9: eine der Fig.8 entsprechende Abbildung mit einer schräg zugestellten Madenschraube,
- Fig.10: eine Seitenansicht einer abgewandelten Befestigungsschraube mit Ringnut mit bogenförmigem Profil, einem am Haltekopf vorgesehenen Anschlag und einer rechtwinklig zur Längsmittelachse der Befestigungsschraube zugestellten Madenschraube,
- Fig.11: eine der Fig.10 entsprechende Darstellung mit einer schräg zugestellten Madenschraube,
- Fig.12: eine Seitenansicht einer Befestigungsschraube mit einer trapezförmig profilierten Ringnut, zwei radial ausgebildeten Anschlägen und einer rechtwinklig zur Längsmittelachse der Befestigungsschraube zugestellten Madenschraube,
- Fig.13: eine der Fig.12 entsprechenden Darstellung mit schräg zugestellter Madenschraube,
- Fig.14: eine Seitenansicht einer Befestigungsschraube mit am Haltekopf umlaufender Schrägfläche und einer rechtwinklig zur Längsmittelachse der Befestigungsschraube angreifenden Madenschraube,
- Fig.15: eine der Fig.14 entsprechende Darstellung mit schräg angreifender Madenschraube,
- Fig.16: eine perspektivische Ansicht eines eines nicht beanspruchten Klammerelements,
- Fig.17: eine Ansicht der Vorderseite des Klammerelements gemäß Fig.16,
- Fig.18: eine Ansicht des auf die Vorderseite gekippten Klammerelements gemäß Fig.16,
- Fig.19: eine Seitenansicht des Klammerelements,
- Fig.20: einen Querschnitt des Klammerelements gemäß der Fig.16 bis Fig.18 in Gebrauchsstellung mit einer Schrägfläche,
- Fig.21: eine der Fig.20 entsprechende Darstellung des um 180° gedrehten Klammerelements in Gebrauchsstellung in alternativer Ausführung sowie
- Fig.22: einen weiteren Querschnitt eines Klammerelements mit zwei Schrägflächen in Gebrauchsstellung.

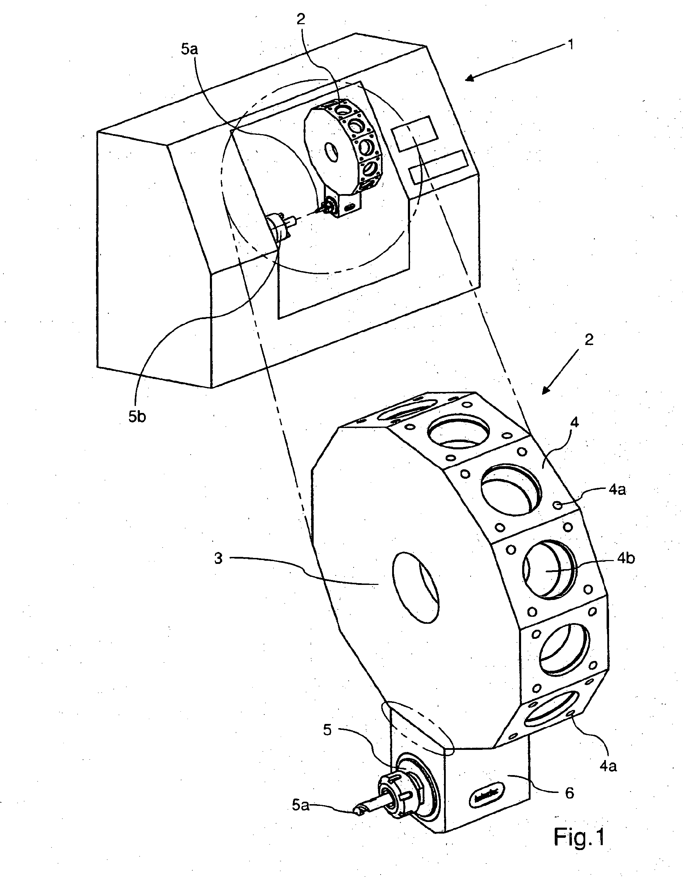

Fig.1 zeigt eine im Ganzen mit 1 bezeichnete Werkzeugmaschine, einen zu ihr gehörenden Werkzeugrevolver 2 mit Werkzeugscheibe 3 und einer Anzahl von Aufnahmestellen 4 für Werkzeuge 5 sowie ein zugehöriges angeflanschtes Werkzeug 5. An dem Werkzeug 5 befindet sich in diesem Ausführungsbeispiel ein Bohrer 5a, der in Gebrauchsstellung gegenüber einer Werkstückspindel 5b positioniert ist. Wichtiger Bestandteil des "Werkzeugs" 5 ist sein Gehäuse 6. In der vergrößerten Darstellung des Werkzeugrevolvers 2 in Fig.1 erkennt man, dass die einzelnen Aufnahmestellen 4 jeweils vier Gewindebohrungen 4a sowie eine Werkzeugschaftaufnahme 4b aufweisen.

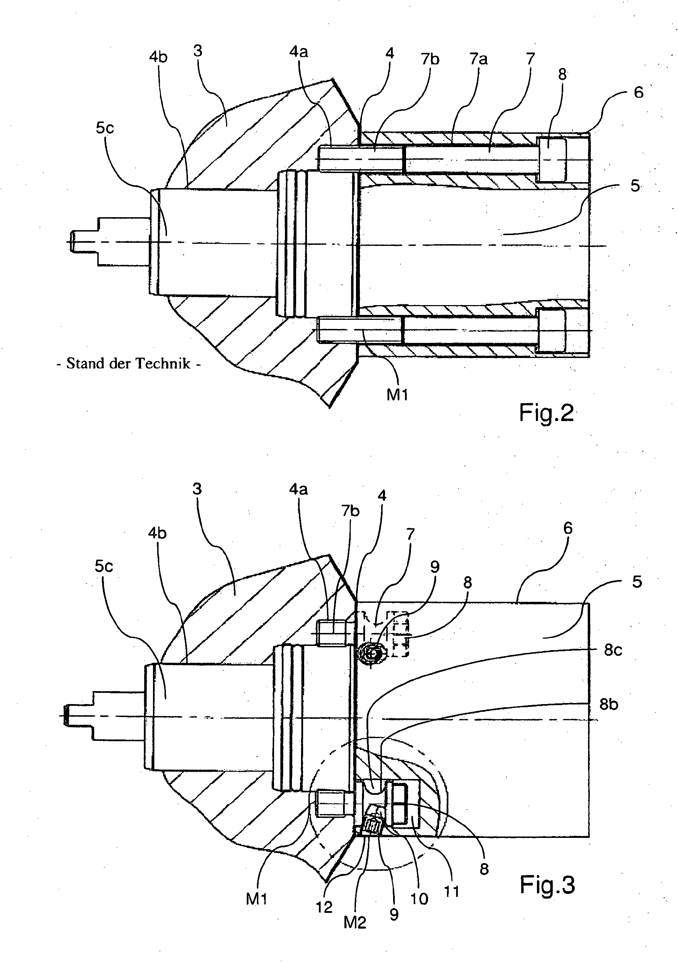

Fig.2 bis Fig.4 zeigen verschiedene Möglichkeiten, das Werkzeug 5 mit seinem Gehäuse 6 an einer Aufnahmestelle 4 der Werkzeugscheibe 3 eines Werkzeugrevolvers 2 zu befestigen.

Fig.2 zeigt eine Befestigung gemäß dem bisherigen Stand der Technik. Man sieht einen Schnitt durch die Werkzeugscheibe 3, das Werkzeug 5 mit seinem Werkzeugschaft 5c und sein Gehäuse 6. Die Schnittebene ist so gewählt, dass auch zwei der vier Befestigungsschrauben 7 erkennbar sind. Bei der hier dargestellten Befestigungsmethode müssen die Befestigungsschrauben 7 durch das gesamte Gehäuse 6 des Werkzeugs 5 geführt werden, um in die Gewindebohrungen 4a eingeschraubt werden zu können. Dabei wird deutlich, dass vergleichsweise viel Bauraum für das Werkzeug 5 im Gehäuse 6 aufgrund der Durchführungen 7a der Befestigungsschrauben 7 verloren geht.

Fig. 3 zeigt eine erste erfindungsgemäße Ausführungsform. Wie in Fig. 2 ist auch hier die Werkzeugscheibe 3 des Werkzeugrevolvers 2 sowie ein angeflanschtes Werkzeug 5 mit Gehäuse 6 zu erkennen. Allerdings unterscheidet sich die Ausführung der Befestigungsschrauben 7 hier erheblich von denen aus Fig.2. Die Befestigungsschrauben 7 sind kürzer als die in Fig.2, haben einen ausgeprägten Haltekopf 8 und verfügen über jeweils ein seitlich, also quer zur Längsmittelachse M1 der Befestigungsschrauben 7, zustellbares Maschinenelement (Madenschraube 9 mit einer Schrägfläche 10).

Bevor das Gehäuse 6 mit dem Werkzeug 5 auf der Aufnahmestelle 4 der Werkzeugscheibe 3 befestigt werden kann, müssen die Befestigungsschrauben 7 ausreichend fest in die Gewindebohrungen 4a der Aufnahmestelle 4 eingeschraubt sein.

Gemäß Fig.3 verfügt das Gehäuse 6 des Werkzeugs 5 an seiner Unterseite außerdem über vier Aussparungen 11 für die Befestigungsschrauben 7 und die Halteköpfe 8, deren Abmessungen in etwa denen der Befestigungsschrauben 7 entsprechen. Die Befestigungsschrauben 7 haben außerdem eine Ringnut 8c, die ihrerseits als Schrägfläche 8b am Haltekopf 8 dienen kann.

Bei den Maschinenelementen handelt es sich in diesem Ausführungsbeispiel um Madenschrauben 9, deren Schrägfläche 10 an einem Ende durch eine konische Verjüngung gebildet wird. Jede Madenschraube 9 ist über einen seitlichen, quer zur Längsmittelachse M1 der Befestigungsschrauben 7 ausgerichteten Zugang 12 in Form einer Gewindebohrung 12 im Gehäuse 6 gelagert. Die Kraftübertragung auf die Befestigungsschrauben 7 gelingt, indem die Schrägflächen 10 am Ende der Madenschrauben 9 an die Schrägflächen 8b der Ringnut 8c an den Unterseiten der Halteköpfe 8 angepresst werden. Da die Madenschrauben 9 in den Gewindebohrungen 12 im Gehäuse 6 gelagert sind, pressen sie das Gehäuse 6 an die Werkzeugscheibe 3 als Reaktion auf den Kontakt zwischen ihren Schrägflächen 10 und den Schrägflächen 8b der Halteköpfe 8 an die Aufnahmestelle 4 der Werkzeugscheibe 3 an. Um die notwendige Haltekraft für die Befestigung des Werkzeugs 5 an der Werkzeugscheibe 3 aufzubringen bzw. erhöhen zu können, werden die Madenschrauben 9 nach Bedarf weiter in die Gewindebohrung 12 hineingedreht.

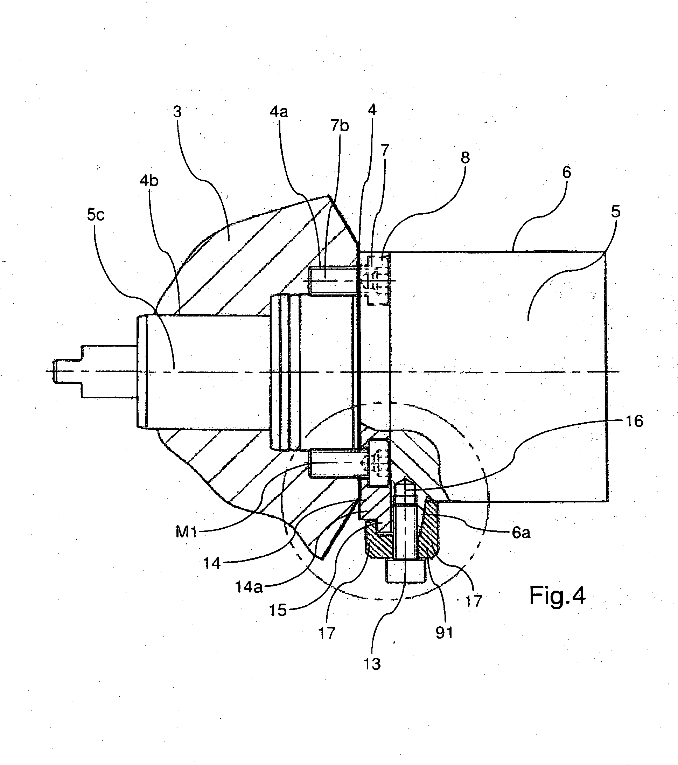

Fig.4 zeigt eine weitere mögliche nicht erfindungsgemäße Ausführungsform. Die Darstellung entspricht weitgehend der Darstellung gemäß Fig.3. Auch hier wird das Werkzeug 5 mittels eines seitlich zustellbaren Maschinenelements an der Werkzeugscheibe 3 befestigt. Allerdings handelt es sich hierbei um ein Klammerelement 91, das über eine Verstellschraube 13 seitlich, quer zur Längsmittelachse M1 der Befestigungsschrauben 7 an das Gehäuse 6 angedrückt wird. Das Klammerelement 91 hat zwei beabstandete Klemmschenkel 17 mit einander zugewandten Innenflächen 17a bzw. 17b.

Das Werkzeug 5 und das Gehäuse 6 sind in dieser Ausführung nicht direkt an der Werkzeugscheibe 3 befestigt, sondern mit einer zwischengeschalteten Adapterplatte 14 verbunden. Diese Adapterplatte 14 ist mit den Befestigungsschrauben 7 auf der Werkzeugscheibe 3 fixiert. An ihrem freien Ende 14a verfügt die Adapterplatte 14 in diesem Fall über einen Absatz 15, der von dem Klammerelement 91 umgriffen wird. Es ist auch möglich, dass der Absatz 15 die Form einer Schrägfläche aufweist.

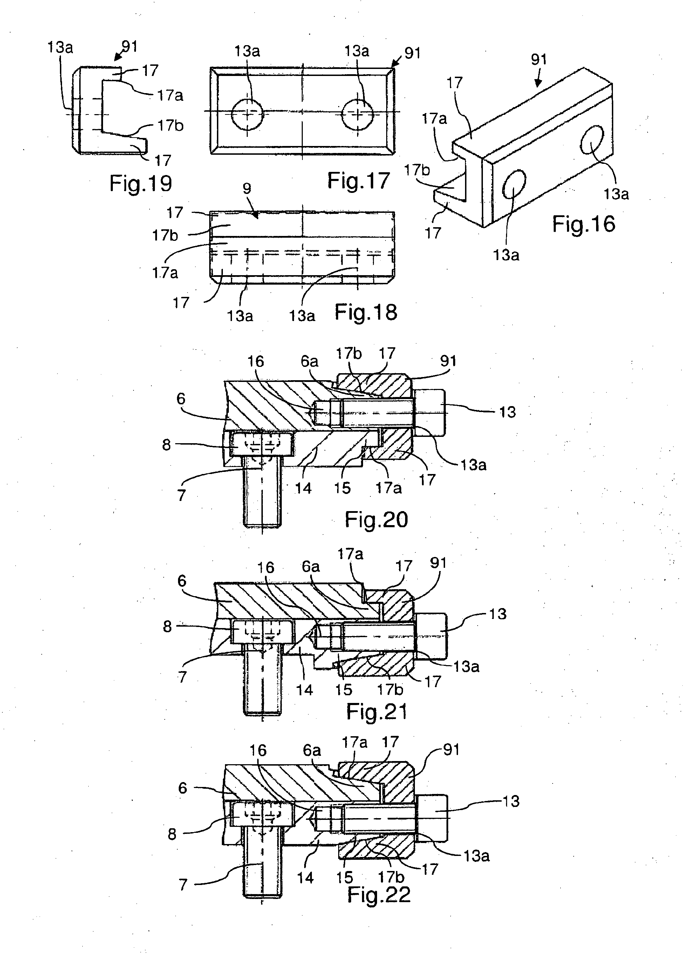

Gemäß Fig.4 verfügt das Gehäuse 6 auf der Seite des freien Endes 14a der Adapterplatte 14 über einen Absatz 6a mit zum Rand hin abfallender Schrägfläche. Aus weiteren Ausführungsbeispielen (Fig. 21) wird ersichtlich, dass der Absatz 6a am Gehäuse 6 auch etwa rechtwinklig zum Rand des Gehäuses 6 ausgebildet sein kann.

Das Klammerelement 91 wird mittels der Verstellschraube 13, die in einer im Gehäuse 6 befindlichen Bohrung 16 eingeschraubt ist, quer zur Längsmittelachse M1 der Befestigungsschraube 7 zugestellt. Beim Anziehen der Verstellschraube 13 wird das Klammerelement 91 mit seinen Innenflächen 17a und 17b über den schrägflächigen Absatz 6a am Gehäuse 6 und den Absatz 15 an der Adapterplatte 14 geschoben und erzeugt eine Haltekraft, die das Werkzeug 5 mit der an der Werkzeugscheibe 3 befestigten Adapterplatte 14 verbindet. Mit dieser Anordnung der Befestigungselemente bleibt nahezu der gesamte Bauraum des Gehäuses 6 des Werkzeugs 5 unberührt und kann für das Werkzeug 5 beansprucht und genutzt werden.

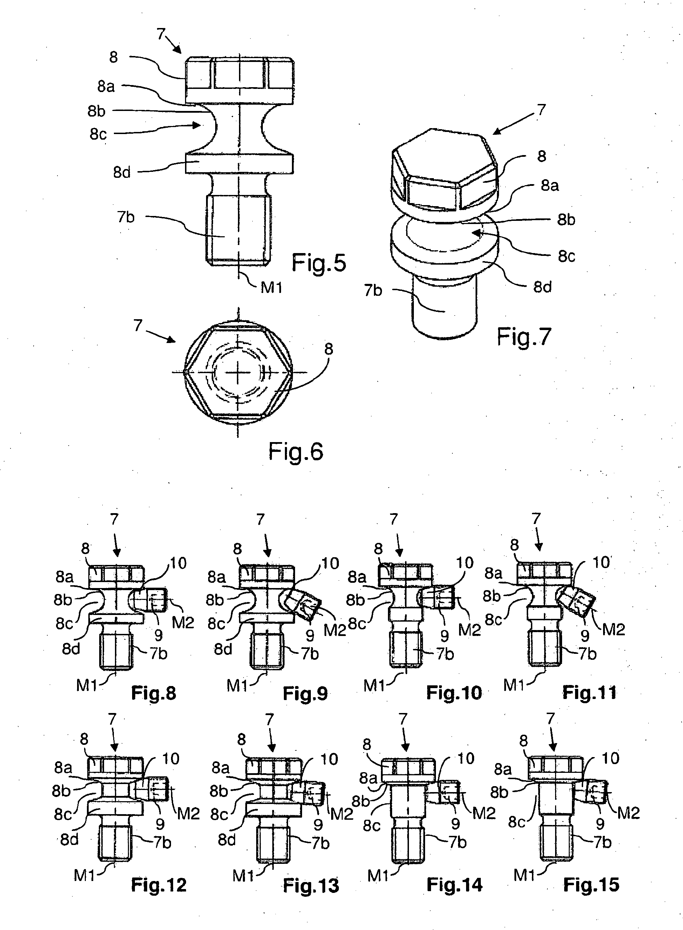

Die Figuren 5 bis 22 zeigen einzelne Elemente in vergrößerten Detailansichten.

Eine vergrößerte Ansicht einer Befestigungsschraube 7 liefert Fig.5, Fig.6 und Fig.7. In den Fig. 5 und 7 ist der Haltekopf 8 sowie eine bogenförmig profilierte Ringnut 8c und die durch diese gebildete umlaufende Schrägfläche 8b an der Unterseite 8a des Haltekopfes 8 deutlich zu erkennen. Die Ringnut 8c ist so an der Befestigungsschraube 7 ausgebildet, dass sich unterhalb des Haltekopfes 8 eine zweite Begrenzung 8d der Ringnut 8c ergibt.

Die Fig.8 bis Fig.15 zeigen verschiedene Ausführungsformen der Befestigungsschrauben 7 und verschiedene Zustellmöglichkeiten für die Madenschraube 9.

Fig.8 zeigt die in Fig. 5 und 7 dargestellte Befestigungsschraube 7 mit einem zur Längsmittelachse M1 der Befestigungsschraube 7 senkrechten Angriff der Madenschraube 9. Der Kontakt zwischen der Schrägfläche 8b der Ringnut 8c und der Schrägfläche 10 der Madenschraube 9 an der Unterseite 8a 8d des Haltekopfes 8 ist ebenfalls gut zu erkennen.

Fig.9 zeigt eine der Fig.8 identische Befestigungsschraube 7 mit veränderter Zustellung der Madenschraube 9, sodass sich zwischen der Achse M2 der Madenschraube 9 und der Achse M1 des Gewindebereichs 7b der Befestigungsschraube 7 ein spitzer Winkel ergibt.

Fig.10 zeigt ebenfalls eine Befestigungsschraube 7 mit bogenförmig profilierter Ringnut 8c, allerdings ohne eine untere Begrenzung 8d am Schaft der Befestigungsschraube 8. Wie in Fig. 8 greift die Madenschraube 9 senkrecht zur Längsmittelachse M1 der Befestigungsschraube 7 an der Unterseite 8 a des Haltekopfs 8 an.

Fig.11 zeigt eine der Fig.10 identische Befestigungsschraube 7, nur dass hier die Zustellung der Madenschraube 9 von schräg unten geschieht.

Gemäß Fig.12 greift die Madenschraube 9 mit ihrer Schrägfläche 10 an der von einer trapezförmig profilierten Ringnut 8c gebildeten Schrägfläche 8b senkrecht zur Längsmittelachse M1 der Befestigungsschraube 7 an. Auch hier findet sich eine untere Begrenzung 8d.

Fig.13 zeigt eine der Fig.12 identische Befestigungsschraube 7 mit Zustellung der Madenschraube 9 unter spitzem Winkel zwischen den Längsmittelachsen M1 (im Gewindebereich 7b) und M2.

In Fig.14 greift die Madenschraube 9 mit ihrer Schrägfläche 10 an der von einer trapezförmig profilierten Ringnut 8c gebildeten Schrägfläche 8b senkrecht zur Längsmittelachse M1 der Befestigungsschraube 7 an. Eine untere Begrenzung 8d wie in Fig.12 und 13 gibt es hier nicht.

Fig.15 zeigt eine der Fig.13 identische Befestigungsschraube 7 mit Zustellung der Madenschraube 9 unter spitzem Winkel zwischen den Längsmittelachsen M1 der Befestigungsschrauben 7 und M2 der Madenschraube 9.

In allen Fig.8 bis Fig.15 funktioniert die Kraftübertragung nach demselben Prinzip. Durch die Zustellung der Madenschraube 9 quer zu den Befestigungsschrauben 7 wird die Schrägfläche 8b in der Ringnut 8c am Haltekopf 8 belastet. Da sich einerseits die Madenschraube 9 in der Gewindebohrung 12 im Gehäuse 6 befindet und die Befestigungsschraube 7 andererseits in der Aufnahmestelle 4 und der entsprechenden Gewindebohrung 4a verschraubt ist und somit von der Madenschraube 9 allenfalls auf Zug belastet, aber nicht aus ihrer Position gebracht werden kann, wird das Gehäuse 6 des Werkzeugs 5 als Resultat dieser Verspannung fest auf die Werkzeugscheibe 3 gedrückt und an dieser fixiert.

Die Fig.16 bis Fig.19 zeigen detaillierte Ansichten des Klammerelements 91. Gemäß Fig.16 und Fig.19 haben die einander zugewandten Klemmschenkel 17 jeweils eine Innenfläche 17a als rechtwinkligen Anschlag ausgebildet und die andere Innenfläche 17b als Schrägfläche ausgebildet.

Gemäß Fig. 16 und Fig. 17 verfügt das Klammerelement 91 über zwei Bohrungen 13a für die Verstellschrauben 13.

Die Fig.20 bis Fig.22 zeigen die Verwendung des Klammerelements 91 am Gehäuse 6 und der Adapterplatte 14.

In Fig.20 ist das Klammerelement 91 über eine Verstellschraube 13, die in eine Gewindebohrung 16 des Gehäuses 6 geschraubt wird, befestigt. Das Klammerelement 91 greift hierbei mit seiner Innenfläche 17a über einen Absatz 15 an der Adapterplatte 14 an. Gehäuseseitig greift die schrägflächig ausgebildete Innenfläche 17b über einen passenden schrägflächigen Absatz 6a am Gehäuse 6 an. Nach dem Keilprinzip entwickelt sich durch Anziehen der Verstellschraube 13 die für die Verbindung notwendige Haltekraft.

Fig.21 zeigt eine ähnliche Darstellung wie Fig.20. Hier befindet sich die Gewindebohrung 16 für die Verstellschraube 13 in der Adapterplatte 14 und das Klammerelement 91 ist um 180° gedreht angebracht. Außerdem weist das Gehäuse 6 einen ebenen Absatz 6a und die Adapterplatte 14 eine Schrägfläche 15 auf.

Nach demselben Prinzip wie in Fig.20 ist das Klammerelement 91 mit seinen entsprechenden Innenflächen 17a und 17b seitlich über den Absatz 6a und die Schrägfläche 15 geschoben und durch die Verstellschraube 13 angepresst, wodurch die Haltekraft erzeugt wird.

Gemäß Fig.22 sind beide Innenflächen 17a und 17b des Klammerelements 91 als Schrägflächen ausgebildet. Damit passen sie zu dem ebenfalls aus einer Schrägfläche bestehenden Absatz 15 an der Adapterplatte 14 und dem schrägflächigen Absatz 6a am Gehäuse 6. Die hier mit der Adapterplatte 14 verschraubte Verstellschraube 13 könnte in einer anderen Ausführungsform auch im Gehäuse 6 vorgesehen sein.

Die Werkzeugmaschine 1 mit wenigstens einem Werkzeugrevolver 2 und einer dazugehörigen Werkzeugscheibe 3 weist an dieser Aufnahmestellen 4 für Werkzeuge 5 auf. Zur Befestigung der Werkzeuge 5 und/oder ihrer Gehäuse 6 an der Werkzeugscheibe 3 ist wenigstens ein seitlich zustellbares Maschinenelement 9 vorgesehen. Dieses Maschinenelement 9 verbindet das Werkzeug 5 und/oder sein Gehäuse 6 gegebenenfalls über eine Adapterplatte 14 mit der Werkzeugscheibe 3, indem eine durch die seitliche Zustellung des Maschinenelements 9 eingeleitete Kraft über Schrägflächen 6a, 8b, 10, 15, 17a, 17b an Halteköpfen 8 vorhandener Befestigungsschrauben 7 und/oder am Gehäuse 6 und/oder an der Adapterplatte 14 so umgelenkt wird, dass sie als Haltekraft zwischen Werkzeug 5 und Werkzeugscheibe 3 wirken kann.

## Patentansprüche

1. Werkzeugmaschine (1) mit wenigstens einem Werkzeugrevolver (2) und einer zugehörigen Werkzeugscheibe (3) mit Aufnahmestellen (4), an denen wenigstens ein Gehäuses (6) eines Werkzeugs (5) befestigt ist, wobei die einzelnen Aufnahmestellen (4) der Werkzeugscheibe (3) des Werkzeugrevolvers (2) Gewindebohrungen (4a) für jeweils einen Haltekopf (8) und einen Gewindebereich (7b) aufweisende Befestigungsschrauben (7) haben, mit welchen wenigstens ein Gehäuse (6) eines Werkzeugs (5) an der Werkzeugscheibe (3) des Werkzeugrevolvers (2) in Gebrauchsstellung festgelegt ist, **dadurch gekennzeichnet, dass** zur Übertragung der Haltekräfte auf die Befestigungsschrauben (7) und zur Befestigung des Gehäuses (6) des Werkzeugs (5) wenigstens ein seitlich zustellbares oder antreibbares, über wenigstens eine Schrägfläche (10) wirkendes Maschinenelement (9) am Gehäuse (6) des Werkzeugs (5) vorgesehen ist, wobei an dem Haltekopf (8) der Befestigungsschrauben (7) seitlich das wenigstens eine zustellbare oder antreibbare Maschinenelement (9) angreift, das die Befestigungsschrauben (7) in Gebrauchsstellung auf Zug belastet, wobei das Maschinenelement seinerseits an dem Gehäuse (6) des Werkzeugs (5) befestigt oder gelagert ist.

2. Werkzeugmaschine nach Anspruch 1, **dadurch gekennzeichnet, dass** das Gehäuse (6) des Werkzeugs (5) der Aufnahmestelle (4) der Werkzeugscheibe (3) zugewandte Aussparungen (11) zum Übergreifen der Hälteköpfe (8) der zuvor eingedrehten Befestigungsschrauben (7) hat und dass diese Aussparungen (11) von der Seite her für das Maschinenelement (9) zugänglich sind.

3. Werkzeugmaschine nach Anspruch 1 oder 2, **dadurch gekennzeichnet, dass** an der Werkzeugscheibe (3) je Aufnahmestelle (4) wenigstens zwei, drei oder vier Befestigungsschrauben (7) vorgesehen sind.

4. Werkzeugmaschine nach einem der Ansprüche 1 bis 3, **dadurch gekennzeichnet, dass** der Haltekopf (8) der Befestigungsschraube (7) an seiner Unterseite (8a) die Schrägfläche (8b) oder ein mit Schrägflächen versehenes Element aufweist.

5. Werkzeugmaschine nach einem der Ansprüche 1 bis 4, **dadurch gekennzeichnet, dass** der Haltekopf (8) der Befestigungsschraube (7) rotationssymmetrisch ist und eine mit der Schrägfläche (8b) versehene Ringfläche oder Ringnut (8c) aufweist.

6. Werkzeugmaschine nach einem der Ansprüche 1 bis 5, **dadurch gekennzeichnet, dass** an dem Maschinenelement (9) die/eine Schrägfläche (10) zum Zusammenwirken mit dem Haltekopf (8) oder mit dessen Schrägfläche (8b) vorgesehen ist.

7. Werkzeugmaschine nach einem der Ansprüche 1 bis 6, **dadurch gekennzeichnet, dass** das Gehäuse (6) des Werkzeugs (5) je Befestigungsschraube (7) zumindest einen seitlichen Zugang (12) mit Lagerung für das zuführbare Maschinenelement (9) aufweist.

8. Werkzeugmaschine nach einem der Ansprüche 1 bis 7, **dadurch gekennzeichnet, dass** der seitliche Zugang (12) eine Gewindebohrung (12) und dass das zustellbare Maschinenelement eine Schraube oder Madenschraube (9) ist.

9. Werkzeugmaschine nach einem der Ansprüche 1 bis 8, **dadurch gekennzeichnet, dass** die Schraube oder Madenschraube (9) einen sich konisch verjüngenden Endbereich (10) als Schrägfläche aufweist.

10. Werkzeugmaschine nach einem der Ansprüche 1 bis 9, **dadurch gekennzeichnet, dass** der seitliche Zugang (12) rechtwinklig zur Längsmittelachse (M1) der Befestigungsschraube (7) verläuft.

11. Werkzeugmaschine nach einem der Ansprüche 1 bis 10, **dadurch gekennzeichnet, dass** der seitliche Zugang (12) im Gehäuse (6) derart schräg verläuft, dass seine Längsmittelachse (M2) mit der Längsmittelachse (M1) des Gewindebereichs (7b) einen spitzen Winkel bildet.

12. Werkzeugmaschine nach einem der Ansprüche 1 bis 3, **dadurch gekennzeichnet, dass** das zustellbare Maschinenelement ein Klammerelement (91) ist, das quer zum Verlauf der Befestigungsschraube (7) seinerseits mit wenigstens einer Verstellschraube (13) andrückbar ist.

## Claims

1. Machine tool (1) with at least one tool turret (2) and an associated tool disc (3) having receiving points (4) to which at least one housing (6) of a tool (5) is fastened, wherein the individual receiving points (4) of the tool disc (3) of the tool turret (2) have threaded bores (4a) for fastening screws (7) which each have a retaining head (8) and a threaded region (7b) and with which at least one housing (6) of a tool (5) is fixed to the tool disc (3) of the tool turret (2) in the use position, **characterized in that**, in order to transmit the retaining forces to the fastening screws (7) and in order to fasten the housing (6) of the tool (5), at least one laterally advanceable or drivable machine element (9) acting via at least one oblique surface (10) is provided on the housing (6) of the tool (5), wherein the at least one advanceable or drivable machine element (9) acts laterally on the retaining head (8) of the fastening screws (7) and subjects the fastening screws (7) to a tensile load in the use position, wherein the machine element, for its part, is fastened to or mounted on the housing (6) of the tool (5).

2. Machine tool according to Claim 1, **characterized in that** the housing (6) of the tool (5) has recesses (11) which face the receiving point (4) of the tool disc (3) and are intended for embracing the retaining heads (8) of the fastening screws (7) screwed in previously, and **in that** said recesses (11) are accessible to the machine element (9) from the side.

3. Machine tool according to Claim 1 or 2, **characterized in that** at least two, three or four fastening screws (7) are provided per receiving point (4) on the tool disc (3).

4. Machine tool according to one of Claims 1 to 3, **characterized in that** the lower side (8a) of the retaining head (8) of the fastening screw (7) has the oblique surface (8b) or an element provided with oblique surfaces.

5. Machine tool according to one of Claims 1 to 4, **characterized in that** the retaining head (8) of the fastening screw (7) is rotationally symmetrical and has an annular surface or annular groove (8c) provided with the oblique surface (8b).

6. Machine tool according to one of Claims 1 to 5, **characterized in that** the/an oblique surface (10) is provided on the machine element (9) for interaction with the retaining head (8) or with the oblique surface (8b) thereof.

7. Machine tool according to one of Claims 1 to 6, **characterized in that** the housing (6) of the tool (5) has at least one lateral access (12) per fastening screw (7) with a mounting for the machine element (9) which can be supplied.

8. Machine tool according to one of Claims 1 to 7, **characterized in that** the lateral access (12) is a threaded bore (12), and **in that** the advanceable machine element is a screw or grub screw (9).

9. Machine tool according to one of Claims 1 to 8, **characterized in that** the screw or grub screw (9) has a conically tapering end region (10) as the oblique surface.

10. Machine tool according to one of Claims 1 to 9, **characterized in that** the lateral access (12) runs at right angles to the longitudinal centre axis (M1) of the fastening screw (7).

11. Machine tool according to one of Claims 1 to 10, **characterized in that** the lateral access (12) in the housing (6) runs obliquely in such a manner that the longitudinal centre axis (M2) of said access forms an acute angle with the longitudinal centre axis (M1) of the threaded region (7b).

12. Machine tool according to one of Claims 1 to 3, **characterized in that** the advanceable machine element is a clamp element (91) which, for its part, can be pressed on transversely with respect to the course of the fastening screw (7) by means of at least one adjustment screw (13).

## Revendications

1. Machine-outil (1) comportant au moins un revolver d'outil (2) et un disque d'outil en faisant partie (3) avec des points supports (4) auxquels au moins un boîtier (6) d'un outil (5) est fixé, les points supports individuels (4) du disque d'outil (3) du revolver d'outil (2) présentant des alésages filetés (4a) pour des vis de fixation (7) présentant respectivement une tête de retenue (8) et une partie filetée (7b), vis grâce auxquelles au moins un boîtier (6) d'un outil (5) est fixé en position d'utilisation au disque d'outil (3) du revolver d'outil (2), **caractérisée en ce que**, pour transférer les forces de retenue aux vis de fixation (7) et pour fixer le boîtier (6) de l'outil (5), il est prévu au moins un élément mécanique (9) pouvant être approché ou entraîné latéralement et agissant via au moins une surface oblique (10) au niveau du boîtier (6) de l'outil (5), l'élément mécanique (9) pouvant être approché ou entraîné s'engrenant latéralement sur la tête de retenue (8) des vis de fixation (7) et soumeltant les vis de fixation (7) à la traction en position d'utilisation, l'élément mécanique étant pour sa part fixé ou posé sur le boîtier (6) de l'outil (5).

2. Machine-outil selon la revendication 1, **caractérisée en ce que** le boîtier (6) de l'outil (5) comporte des échancrures (11) tournées vers le point support (4) du disque d'outil (3) pour chevaucher les têtes de retenue (8) des vis de fixation (7) précédemment vissées et **en ce que** ces échancrures (11) sont accessibles par le côté à l'élément mécanique (9).

3. Machine-outil selon la revendication 1 ou 2, **caractérisée en ce que**, au niveau du disque d'outil (3), il est prévu par point support (4) au moins deux, trois ou quatre vis de fixation (7).

4. Machine-outil selon une des revendications 1 à 3, **caractérisée en ce que** la tête de retenue (8) de la vis de fixation (7) présente sur sa face inférieure (8a) la surface oblique (8b) ou un élément pourvu de surfaces obliques.

5. Machine-outil selon une des revendications 1 à 4, **caractérisée en ce que** la tête de retenue (8) de la vis de fixation (7) est symétrique en rotation et présente une surface annulaire ou rainure annulaire (8c) pourvue de la surface oblique (8b).

6. Machine-outil selon une des revendications 1 à 5, **caractérisée en ce qu'**est prévue au niveau de l'élément mécanique (9) la/une surface oblique (10) pour coopérer avec la tête de retenue (8) ou avec sa surface oblique (8b).

7. Machine-outil selon une des revendications 1 à 6, **caractérisée en ce que** le boîtier (6) de l'outil (5) présente par vis de fixation (7) au moins un accès latéral (12) avec un appui pour l'élément mécanique pouvant être amené(9).

8. Machine-outil selon une des revendications 1 à 7, **caractérisée en ce que** l'accès latéral (12) est un alésage fileté (12) et **en ce que** l'élément mécanique pouvant être approché est une vis ou vis sans tête (9).

9. Machine-outil selon une des revendications 1 à 8, **caractérisée en ce que** la vis ou vis sans tête (9) présente une partie terminale (10) se rétrécissant en cône en tant que surface oblique.

10. Machine-outil selon une des revendications 1 à 9, **caractérisée en ce que** l'accès latéral (12) s'étend orthogonalement par rapport à l'axe médian longitudinal (M1) de la vis de fixation (7).

11. Machine-outil selon une des revendications 1 à 10, **caractérisée en ce que** l'accès latéral (12) s'étend obliquement dans le boîtier (6) de manière à ce que son axe médian longitudinal (M2) forme un angle aigu avec l'axe médian longitudinal (M1) de la partie filetée (7b).

12. Machine-outil selon une des revendications 1 à 3, **caractérisée en ce que** l'élément mécanique pouvant être approché est un élément de fixation (91) qui peut être serré pour sa part à l'aide d'au moins une vis de réglage (13) transversalement à l'étendue de la vis de fixation (7).
